# EUROPEAN PATENT APPLICATION

(11) **EP 4 190 747 A1**
(43) Date of publication of application: **07.06.2023**
(21) Application number: 22156786.0
(22) Date of filing: 15.02.2022
(51) Int. Cl.: C01B 32/318, C01B 32/354, C01B 33/02, C01B 33/113, H01M 4/38, H01M 4/48, H01M 4/62, H01M 4/02

(54) **SILICON-CARBON COMPOSITE NEGATIVE-ELECTRODE ACTIVE MATERIAL FOR LITHIUM SECONDARY BATTERY HAVING IMPROVED ELECTROCHEMICAL PROPERTIES, METHOD FOR PRODUCING THE SAME, AND LITHIUM SECONDARY BATTERY INCLUDING THE SAME**

(30) Priority: 02.12.2021 KR 20210170987
(71) Applicant: Korea Institute of Ceramic Engineering and Technology, Jinju-si, Gyeongsangnam-do 52851 (KR)
(72) Inventor: ROH, Kwang-Chul, 52859 Gyeongsangnam-do (KR); CHAE, Ji-Su, 52860 Gyeongsangnam-do (KR); JUNG, Dae-Soo, 51319 Gyeongsangnam-do (KR); CHOI, Jung-Hyun, 52859 Gyeongsangnam-do (KR)
(74) Representative: Zacco Sweden AB

(57) **Abstract**

Disclosed is a silicon-carbon composite negative-electrode active material for a lithium secondary battery having improved electrochemical properties which contains a carbon material derived from a wood-based material and a compound containing an isocyanate functional group in order to improve unstable dispersibility of silicon-based particles used as a negative-electrode active material for a lithium secondary battery, thereby improving electrical conductivity and producing stable electrode slurry. Further, a method for producing the same, and a lithium secondary battery including the same are disclosed.

## Description

### BACKGROUND

### Field of the Invention

The present disclosure relates to a silicon-carbon composite negative-electrode active material for a lithium secondary battery having improved electrochemical properties, a method for producing the same, and a lithium secondary battery including the same. More specifically, the present disclosure relates to a silicon-carbon composite negative-electrode active material for a lithium secondary battery having improved electrochemical properties which contains a carbon material derived from a wood-based material and a compound containing an isocyanate functional group in order to improve unstable dispersibility of silicon-based particles used as a negative-electrode active material for a lithium secondary battery, thereby improving electrical conductivity and producing stable electrode slurry, and to a method for producing the same, and a lithium secondary battery including the same.

### Description of Related Art

Recently, as a market of portable electronic devices such as camcorders, cellular phones, and notebook PCs is rapidly growing, a market of a lithium secondary battery as a power source thereof is also growing rapidly. In particular, use of the secondary batteries as a power source for electric vehicles (EVs), hybrid electric vehicles (HEVs), and the like has been realized.

Accordingly, many studies have been conducted on secondary batteries that may meet various needs. In particular, there is a high demand for a lithium secondary battery having a high energy density, a high discharge voltage, and a long lifespan.

These lithium secondary batteries may be classified into cylindrical and prismatic batteries according to a shape thereof. The cylindrical batteries are mainly used in notebook computers and camcorders, while prismatic batteries are mainly used in mobile phones. The lithium secondary battery has a large capacity and has no memory effect. Thus, the battery may be recharged as it is in a remaining capacity state.

The lithium secondary battery is composed of a negative-electrode, a positive-electrode, electrolyte, and a separator membrane. LiCoO₂ is mainly used for the positive-electrode, while a carbon material including graphite is mainly used for the negative-electrode. The separator membrane is interposed between the negative-electrode and the positive-electrode. A polyolefin-based porous separator membrane is mainly used. The electrolyte may include a non-aqueous electrolyte containing lithium salt such as LiPF₆. The electrode material has a structure in which lithium (Li⁺) in an ionic state may be reversibly inserted into and then released therefrom.

That is, in the lithium secondary battery, phenomenon in which lithium located inside LiCoO₂ is released out of LiCoO₂ and then moves along the electrolyte and enters carbon corresponds to charging. Movement of lithium in the opposite direction corresponds to discharging.

Recently, attempts have been made to produce a negative-electrode made of various materials to improve electrochemical performance of the lithium secondary batteries.

A related prior document includes Korean Patent Publication No. 10-2012-0137919 (published on December 24, 2012) which describes a negative-electrode active material, a method for producing the same, and a lithium secondary battery having the same.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

A purpose of the present disclosure is provide a silicon-carbon composite negative-electrode active material for a lithium secondary battery having improved electrochemical properties which contains a carbon material derived from a wood-based material and a compound containing an isocyanate functional group in order to improve unstable dispersibility of silicon-based particles used as a negative-electrode active material for a lithium secondary battery, thereby improving electrical conductivity and producing stable electrode slurry, and to provide a method for producing the same, and a lithium secondary battery including the same.

Purposes in accordance with the present disclosure are not limited to the above-mentioned purpose. Other purposes and advantages in accordance with the present disclosure as not mentioned above may be understood from following descriptions and more clearly understood from embodiments in accordance with the present disclosure. Further, it will be readily appreciated that the purposes and advantages in accordance with the present disclosure may be realized by features and combinations thereof as disclosed in the claims.

A first aspect of the present disclosure provides a method for producing a silicon-carbon composite negative-electrode active material for a lithium secondary battery having improved electrochemical properties, the method comprising: (a) obtaining a carbon material using a wood-based raw-material; (b) adding and mixing the carbon material and a compound containing an isocyanate functional group to a solvent to produce a mixture, and then adding silicon-based particles to the mixture, and then double-boiling the mixture to produce a silicon-carbon mixture; and (c) heat-treating the silicon-carbon mixture in an inert atmosphere to obtain a silicon-carbon composite negative-electrode active material.

In one implementation of the method, the (a) includes: (a-1) crushing the wood-based raw-material into a size of 80 mesh or smaller; (a-2) performing a carbonizing heat-treatment on the crushed wood-based raw-material in an inert atmosphere; and (a-3) performing an activation treatment on the wood-based raw-material subjected to the carbonizing heat-treatment, and then washing the wood-based raw-material to obtain the carbon material.

In one implementation of the method, in the (a-1), the wood-based raw-material includes at least one selected from a group consisting of softwood, hardwood, waste wood, and paper.

In one implementation of the method, in the (a-2), the carbonizing heat-treatment is performed at 600 to 800°C for 1 to 5 hours.

In one implementation of the method, in the (a-3), the activation treatment includes steam activation treatment or alkali activation treatment.

In one implementation of the method, after the (a-3), the carbon material has a specific surface area of 500 to 3,000 m²/g.

In one implementation of the method, in the (b), each of the silicon-based particles is made of at least one selected from a group consisting of Si, SiO and SiOₓ (1 < x < 2).

In one implementation of the method, in the (b), the carbon material and the compound containing the isocyanate functional group are mixed with each other in a weight ratio in a range of 1: 0.1 to 1: 1.

In one implementation of the method, in the (b), the compound containing the isocyanate functional group includes at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate.

In one implementation of the method, in the (c), the heat-treatment is performed at 800 to 1,000°C for 6 to 18 hours.

A second aspect of the present disclosure provides a silicon-carbon composite negative-electrode active material for a lithium secondary battery having improved electrochemical properties, wherein the silicon-carbon composite negative-electrode active material includes silicon-based particles, a carbon material, and a compound containing an isocyanate functional group, wherein each of the silicon-based particles is made of at least one selected from a group consisting of Si, SiO and SiOₓ (1 < x < 2), wherein the carbon material is derived from a wood-based raw-material including at least one selected from a group consisting of softwood, hardwood, waste wood, and paper.

In one implementation of the silicon-carbon composite negative-electrode active material, a content of the carbon material is in a range of 1 to 100 parts by weight based on 100 parts by weight of the silicon-based particles.

In one implementation of the silicon-carbon composite negative-electrode active material, the carbon material and the compound containing the isocyanate functional group are mixed with each other in a weight ratio in a range of 1: 0.1 to 1: 1.

In one implementation of the silicon-carbon composite negative-electrode active material, the compound containing the isocyanate functional group includes at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate.

A third aspect of the present disclosure provides a lithium secondary battery including a silicon-carbon composite negative-electrode active material having improved electrochemical properties, wherein the lithium secondary battery comprises: a negative-electrode including a silicon-carbon composite negative-electrode active material and a binder; a lithium positive-electrode spaced apart from the negative-electrode; a separator membrane disposed between the negative-electrode and the positive-electrode for preventing a short circuit between the negative-electrode and the positive-electrode; and electrolyte impregnated in each of the negative-electrode and the positive-electrode, wherein the silicon-carbon composite negative-electrode active material includes silicon-based particles, a carbon material, and a compound containing an isocyanate functional group, wherein each of the silicon-based particles is made of at least one selected from a group consisting of Si, SiO and SiOₓ (1 < x < 2), wherein the carbon material is derived from a wood-based raw-material including at least one selected from a group consisting of softwood, hardwood, waste wood, and paper.

In one implementation of the lithium secondary battery, a content of the carbon material is in a range of 1 to 100 parts by weight based on 100 parts by weight of the silicon-based particles.

In one implementation of the lithium secondary battery, the carbon material and the compound containing the isocyanate functional group are mixed with each other in a weight ratio in a range of 1: 0.1 to 1: 1.

In one implementation of the lithium secondary battery, the compound containing the isocyanate functional group includes at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate.

In the silicon-carbon composite negative-electrode active material for a lithium secondary battery having improved electrochemical properties according to the present disclosure, the method for producing the same, and the lithium secondary battery including the same, the active material may contain the carbon material derived from wood-based material and the compound containing the isocyanate functional group in order to improve the unstable dispersibility of the silicon-based particles used as the negative-electrode active material for the lithium secondary battery. Thus, the stable electrode slurry may be produced while achieving the effect of improving the electrical conductivity.

In the silicon-carbon composite negative-electrode active material for a lithium secondary battery having improved electrochemical properties according to the present disclosure, the method for producing the same, and the lithium secondary battery including the same, the active material may be produced by mixing the carbon material derived from the wood-based material and the compound containing the isocyanate functional group with each other, and adding the silicon-based particles to the mixture and then and double-boiling the mixture. Thus, with the improvement of the unstable dispersibility of silicon-based particles, the electrical conductivity may be improved and the stable electrode slurry may be produced, thereby improving the capacity retention.

As a result, in the silicon-carbon composite negative-electrode active material for a lithium secondary battery having improved electrochemical properties according to the present disclosure, the method for producing the same, and the lithium secondary battery including the same, the method may add the carbon material and the compound containing the isocyanate functional group to a solvent and mixing them to produce the mixture and then injecting the silicon-based particles thereto and dispersing the silicon-based particles using a mechanical agitator and an ultrasonic tip to disperse the silicon-based particles. This may maximize the unstable dispersion of the silicon-based particles, thereby greatly improving specific capacitance values at various current densities.

### BRIEF DESCRIPTION OF DRAWINGS

FIG. 1 is a process flow chart showing a method for producing a silicon-carbon composite negative-electrode active material for a lithium secondary battery having improved electrochemical properties according to an embodiment of the present disclosure.
FIG. 2 is a schematic diagram for illustrating a process of producing a silicon-carbon mixture.

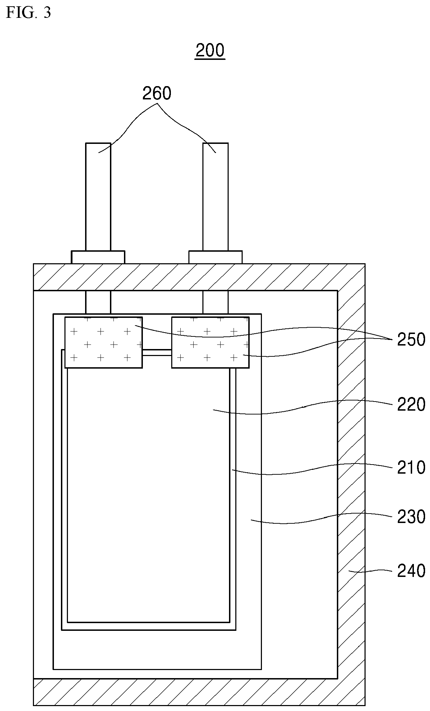

FIG. 3 is a cross-sectional view showing a lithium secondary battery including a silicon-carbon composite negative-electrode active material having improved electrochemical properties according to an embodiment of the present disclosure.
FIG. 4 is a graph showing electrochemical performance evaluation results of lithium secondary batteries respectively produced according to Present Example 1 and Comparative Example 1.

### DETAILED DESCRIPTIONS

Examples of various embodiments are illustrated and described further below. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. It will be understood that the description herein is not intended to limit the claims to the specific embodiments described. On the contrary, it is intended to cover alternatives, modifications, and equivalents as may be included within the spirit and scope of the present disclosure as defined by the appended claims.

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of' when preceding a list of elements may modify the entirety of list of elements and may not modify the individual elements of the list. When referring to "C to D", this means C inclusive to D inclusive unless otherwise specified.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, with reference to the accompanying drawings, a silicon-carbon composite negative-electrode active material for a lithium secondary battery having improved electrochemical properties according to a preferred embodiment of the present disclosure, a method for producing the same, and a lithium secondary battery including the same will be described in detail.

### Method for producing silicon-carbon composite negative-electrode active material for lithium secondary battery having improved electrochemical properties

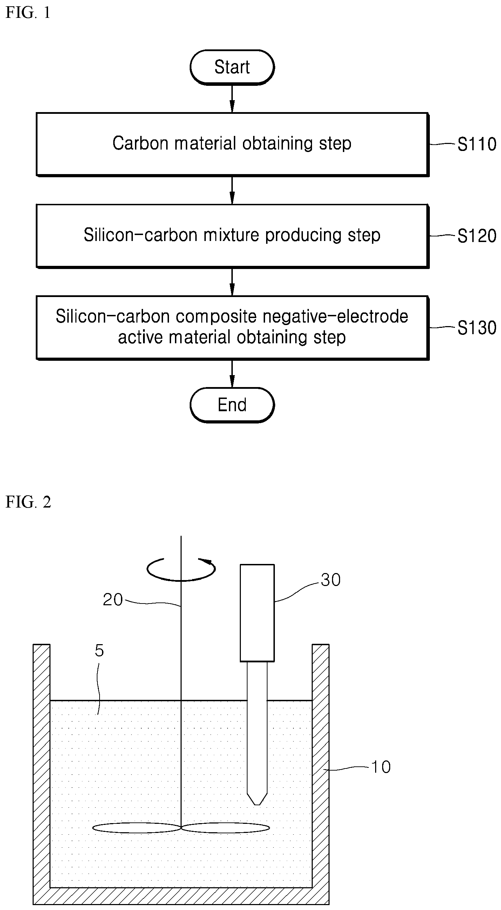

FIG. 1 is a process flow chart showing a method for producing a silicon-carbon composite negative-electrode active material for a lithium secondary battery having improved electrochemical properties according to an embodiment of the present disclosure.

As shown in FIG. 1, a method for producing a silicon-carbon composite negative-electrode active material for a lithium secondary battery having improved electrochemical properties according to an embodiment of the present disclosure may include a carbon material obtaining step S110, a silicon-carbon mixture producing step S120, and a silicon-carbon composite negative-electrode active material obtaining step S130.

### Obtaining carbon material

In the carbon material obtaining step S110, a carbon material is obtained using a wood-based raw-material.

This carbon material obtaining step S110 includes a crushing process, a carbonizing heat-treatment process, and an activation treatment process.

In the crushing process, the wood-based raw-material is crushed to a size of 80 mesh or smaller. It is preferable to crush this wood-based raw-material to a size of 80 mesh or smaller, more preferably, a size of 10 to 60 mesh. When the wood-based raw-material is crushed to a size smaller than 10 mesh, a crushing cost may be excessive. Thus, it is not economical. Conversely, when the wood-based raw-material is crushed to a size exceeding 80 mesh, it is undesirable because excessive energy is required in the carbonizing heat-treatment process.

In this connection, the wood-based raw-material may include at least one selected from softwood, hardwood, waste wood, and paper. However, the disclosure is not limited thereto. Further, herbaceous plants, wood waste, etc. may be used as wood-based raw-materials.

In the carbonizing heat-treatment process, the crushed wood-based raw-material is subjected to carbonizing heat-treating in an inert atmosphere.

This carbonizing heat-treatment is preferably performed for 1 to 5 hours at 600 to 800° C in an inert atmosphere into which one or more gases selected from helium, nitrogen, and argon are supplied. When a carbonizing heat-treatment temperature is lower than 600°C or a carbonizing heat-treatment time is smaller than 1 hour, low molecular weight gases are less volatilized and remain inside the wood-based raw-material. Thus, a yield of the carbon material may be reduced. Conversely, when the carbonizing heat-treatment temperature exceeds 800°C or the carbonizing heat-treatment time exceeds 5 hours, the carbon material is contaminated due to thermal decomposition products of tar gas discharged from the wood-based raw-material at the high temperature.

In the activation treatment process, the carbonized wood-based raw-material is subjected to activation treatment, and then washed to obtain a carbon material.

This activation treatment may include steam activation treatment or alkali activation treatment. The steam activation treatment may obtain a carbon material with a relatively high micropore ratio, a small specific surface area, and smaller residual impurities, compared to the alkali activation treatment. In contrast, the alkali activation treatment may obtain a carbon material with a well-defined pore structure and a large specific surface area. However, in the alkali activation treatment, metal impurities are likely to remain in the activation process, and a washing process is required to remove metal oxides and acidic functional groups.

After this activation treatment process, the carbon material has a specific surface area of 500 to 3,000 m²/g.

### Producing of silicon-carbon mixture

In the silicon-carbon mixture producing step S120, the carbon material and a compound containing an isocyanate functional group are added to a solvent and are mixed with each other, then silicon-based particles are added to the mixture. Then, the mixture is double-boiled to produce a silicon-carbon mixture.

FIG. 2 is a schematic diagram for illustrating a process of producing a silicon-carbon mixture, which is described in connection with FIG. 1.

As shown in FIG. 1 and FIG. 2, in a reaction vessel 10, a carbon material and a compound containing an isocyanate functional group are added to a solvent and are mixed with each other. Then, silicon-based particles are added to the mixture The, the mixture are double-boiled to produce the silicon-carbon mixture 5.

In this connection, the mixing is preferably performed simultaneously with ultrasonic treatment using an ultrasonic tip 30 while the mixture is stirred for 10 to 60 minutes at a speed of 500 to 3,000 rpm using a mechanical agitator 20.

In this step, the ultrasonic treatment is preferably performed under an output power condition of 30 to 40 kHz and 100 to 180W. When the ultrasonic output power is lower than 100W or the ultrasonic treatment time is smaller than 10 minutes, there is a risk that the carbon material and the compound containing the isocyanate functional group may not be uniformly mixed in the solvent. Conversely, when the ultrasonic output power exceeds 180W or the ultrasonic treatment time exceeds 60 minutes, this may increase a production cost and a production time without further increasing the effect, and thus is not economical.

The solvent may be selected from distilled water, ethanol, methanol, and the like, but is not limited thereto.

The compound containing the isocyanate functional group functions as a dispersant added to improve dispersibility between the silicon-based particles and the carbon material. In addition, the carbon material together with the compound containing the isocyanate functional group are added to improve electrical conductivity.

Thus, in accordance with the present disclosure, the silicon-based particles may be added to the mixture of the carbon material derived from the wood-based material and the compound containing the isocyanate functional group. Then, the mixture may be double-boiled. Thus, with the improvement of the unstable dispersibility of the silicon-based particles, the stable electrode slurry having improved electrical conductivity may be produced, thereby improving the electrochemical properties.

In this connection, the carbon material and the compound containing the isocyanate functional group are preferably mixed with each other in a weight ratio of 1: 0.1 to 1: 1, more preferably, a weight ratio of 1: 0.2 to 1: 0.6.

When a mixing ratio of the carbon material and the compound containing the isocyanate functional group are lower than a weight ratio of 1:0.1, it may be difficult to properly exhibit the effect of improving the dispersibility of the silicon-based particles because an amount of the compound containing the isocyanate functional group is too small. Conversely, when the mixing ratio of the carbon material and the compound containing the isocyanate functional group exceeds a weight ratio of 1:1, this is not economical because there is a risk of consuming only the compound containing a large amount of the isocyanate functional group without further increasing the effect.

The compound containing the isocyanate functional group may include at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate. It is more preferable to use the octadecyl isocyanate as the compound containing the isocyanate functional group.

The silicon-based particle may be made of at least one selected from a group consisting of Si, SiO and SiOₓ (1 < x < 2). It is preferable to use the silicon-based particle having an average diameter of 1 to 100nm, and more preferably, an average diameter of 10 to 40nm. When the average diameter of the silicon-based particle is smaller than 1nm, it is not only difficult to produce nanoparticles, but also there is a problem that lithium ion charging and discharging may not be achieved in an sufficient amount. Conversely, when the average diameter of the silicon-based particle exceeds 100nm, there is a risk that the silicon-based particles are easily broken due to continuous lithium ion charging and discharging.

### Obtaining of silicon-carbon composite negative-electrode active material

In the silicon-carbon composite negative-electrode active material obtaining step S130, the silicon-carbon mixture is heat-treated in an inert atmosphere to obtain a silicon-carbon composite negative-electrode active material.

In this step, the heat-treatment is preferably performed for 6 to 18 hours at 800 to 1,000° C in an inert atmosphere to which one or more gases selected from helium, nitrogen and argon are supplied.

Under the heat-treatment in the inert atmosphere, the silicon-based particles react with the carbon material and thus lose oxygen such that a portion of a surface of the particle is electrochemically activated. When the heat-treatment temperature is lower than 800°C or the heat-treatment time is smaller than 6 hours, there is a risk that the surface may not be electrochemically activated reliably. When the heat-treatment temperature exceeds 1,000°C or the heat-treatment time exceeds 18 hours, there is a problem of increasing only the production cost and time without further increasing the effect, and thus this is not economical.

Then, the method for producing the silicon-carbon composite negative-electrode active material for a lithium secondary battery having improved electrochemical properties according to an embodiment of the present disclosure may be terminated.

### Silicon-carbon composite negative-electrode active material for lithium secondary battery having improved electrochemical properties

The silicon-carbon composite negative-electrode active material for a lithium secondary battery having improved electrochemical properties according to an embodiment of the present disclosure includes the silicon-based particles, the carbon material, and the compound containing the isocyanate functional group.

In this connection, the silicon-based particle may be made of at least one selected from a group consisting of Si, SiO and SiOₓ (1 < x < 2). It is preferable to use the silicon-based particle having an average diameter of 1 to 100nm, and more preferably, an average diameter of 10 to 40nm. When the average diameter of the silicon-based particle is smaller than 1nm, it is not only difficult to produce nanoparticles, but also there is a problem that lithium ion charging and discharging may not be achieved in an sufficient amount. Conversely, when the average diameter of the silicon-based particle exceeds 100nm, there is a risk that the silicon-based particles are easily broken due to continuous lithium ion charging and discharging.

In addition, the carbon material may be derived from the wood-based raw-material including at least one selected from softwood, broad-leaved wood, waste wood and paper. The carbon material has a specific surface area of 500 to 3,000 m²/g.

The carbon material is preferably added in an amount of 1 to 100 parts by weight, more preferably, 10 to 30 parts by weight, based on 100 parts by weight of the silicon-based particles. When the carbon material is added in an amount of smaller than 1 part by weight based on 100 parts by weight of the silicon-based particles, it is difficult to properly exhibit the effect of improving the electrical conductivity because an amount of the carbon material is insignificant. Conversely, when the carbon material is added in an amount exceeding 100 parts by weight based on 100 parts by weight of silicon-based particles, there is a problem that lithium ions may not be charged and discharged in a sufficient manner due to a relatively decrease in a content of the silicon-based particles.

Further, the carbon material and the compound containing the isocyanate functional group are preferably mixed with each other in a weight ratio of 1: 0.1 to 1: 1, more preferably, a weight ratio of 1: 0.2 to 1: 0.6.

When a mixing ratio of the carbon material and the compound containing the isocyanate functional group are lower than a weight ratio of 1:0.1, it may be difficult to properly exhibit the effect of improving the dispersibility of the silicon-based particles because an amount of the compound containing the isocyanate functional group is too small. Conversely, when the mixing ratio of the carbon material and the compound containing the isocyanate functional group exceeds a weight ratio of 1:1, this is not economical because there is a risk of consuming only the compound containing a large amount of the isocyanate functional group without further increasing the effect.

The compound containing the isocyanate functional group may include at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate. It is more preferable to use the octadecyl isocyanate as the compound containing the isocyanate functional group.

### Lithium secondary battery including silicon-carbon composite negative-electrode active material having improved electrochemical properties

A lithium secondary battery 200 including a silicon-carbon composite negative-electrode active material having improved electrochemical properties according to an embodiment of the present disclosure may include a negative-electrode 210 including a silicon-carbon composite negative-electrode active material and a binder, a lithium positive-electrode 220 spaced apart from the negative-electrode 210, a separator membrane 230 disposed between the negative-electrode 210 and the positive-electrode 220 for preventing a short circuit between the negative-electrode 210 and the positive-electrode 220, and electrolyte impregnated in the negative-electrode 210 and the positive-electrode 220. In this connection, each of the negative-electrode 210 and the positive-electrode 220 may have an electrode tab 250 attached thereto via a protective tape 240 and partially protruding out of a battery casing 205.

Thus, the lithium secondary battery 200 including a silicon-carbon composite negative-electrode active material having improved electrochemical properties according to an embodiment of the present disclosure may be configured such that the negative-electrode 210, the positive-electrode 220 and the separator membrane 230 may be wound or folded so as to be accommodated in the battery casing 205. Next, the electrolyte is injected into the battery casing 205 and is impregnated into the negative-electrode 210 and the positive-electrode 220. The casing is sealed with a cap assembly to complete the lithium secondary battery. In this connection, the battery casing 205 may have a cylindrical shape, a square shape, a thin film shape, or the like. For example, the lithium secondary battery 200 according to the present disclosure has excellent electrochemical properties, and thus may be used in an electric vehicle (EV) or a hybrid vehicle such as a plug-in hybrid electric vehicle (PHEV). Further, the lithium secondary battery according to the present disclosure may be used in a technical field requiring a large amount of power to be stored. For example, the lithium secondary battery according to the present disclosure may be used for an electric bicycle, a power tool, and the like.

In this connection, the negative-electrode 210 for a lithium secondary battery according to the present disclosure includes the silicon-carbon composite negative-electrode active material and the binder. As a result, the negative-electrode 210 for the lithium secondary battery according to the present disclosure may use the silicon-carbon composite negative-electrode active material as a negative-electrode active material. Thus, a conductive material is omitted therein.

The silicon-carbon composite negative-electrode active material includes the silicon-based particles, the carbon material and the compound containing the isocyanate functional group.

The silicon-based particle may be made of at least one selected from a group consisting of Si, SiO and SiOₓ (1 < x < 2). It is preferable to use the silicon-based particle having an average diameter of 1 to 100nm, and more preferably, an average diameter of 10 to 40nm. When the average diameter of the silicon-based particle is smaller than 1nm, it is not only difficult to produce nanoparticles, but also there is a problem that lithium ion charging and discharging may not be achieved in an sufficient amount. Conversely, when the average diameter of the silicon-based particle exceeds 100nm, there is a risk that the silicon-based particles are easily broken due to continuous lithium ion charging and discharging.

The carbon material is preferably added in an amount of 1 to 100 parts by weight, more preferably, 10 to 30 parts by weight, based on 100 parts by weight of the silicon-based particles. When the carbon material is added in an amount of smaller than 1 part by weight based on 100 parts by weight of the silicon-based particles, it is difficult to properly exhibit the effect of improving the electrical conductivity because an amount of the carbon material is insignificant. Conversely, when the carbon material is added in an amount exceeding 100 parts by weight based on 100 parts by weight of silicon-based particles, there is a problem that lithium ions may not be charged and discharged in a sufficient manner due to a relatively decrease in a content of the silicon-based particles.

Further, the carbon material and the compound containing the isocyanate functional group are preferably mixed with each other in a weight ratio of 1: 0.1 to 1: 1, more preferably, a weight ratio of 1: 0.2 to 1: 0.6.

When a mixing ratio of the carbon material and the compound containing the isocyanate functional group are lower than a weight ratio of 1:0.1, it may be difficult to properly exhibit the effect of improving the dispersibility of the silicon-based particles because an amount of the compound containing the isocyanate functional group is too small. Conversely, when the mixing ratio of the carbon material and the compound containing the isocyanate functional group exceeds a weight ratio of 1:1, this is not economical because there is a risk of consuming only the compound containing a large amount of the isocyanate functional group without further increasing the effect.

The compound containing the isocyanate functional group may include at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate. It is more preferable to use the octadecyl isocyanate as the compound containing the isocyanate functional group.

Further, the binder may include at least one selected from a group consisting of polytetrafluoroethylene (PTFE), polyvinylidene fluoride (PVdF), carboxymethyl cellulose (CMC), polyvinyl alcohol (PVA), polyvinyl butyral (PVB), poly-N-vinylpyrrolidone (PVP), styrene-butadiene rubber (SBR), polyamide-imide, polyimide, and mixture of at least two thereof. However, the present invention is not limited thereto.

In addition, the separator membrane 230 is not particularly limited as long as the separator membrane is commonly used in the battery field. For example, the separator membrane 230 may be made of polyolefin, polyethylene, or polypropylene.

In the silicon-carbon composite negative-electrode active material for a lithium secondary battery having improved electrochemical properties according to the present disclosure, the method for producing the same, and the lithium secondary battery including the same, the active material may contain the carbon material derived from wood-based material and the compound containing the isocyanate functional group in order to improve the unstable dispersibility of the silicon-based particles used as the negative-electrode active material for the lithium secondary battery. Thus, the stable electrode slurry may be produced while achieving the effect of improving the electrical conductivity.

In the silicon-carbon composite negative-electrode active material for a lithium secondary battery having improved electrochemical properties according to the present disclosure, the method for producing the same, and the lithium secondary battery including the same, the active material may be produced by mixing the carbon material derived from the wood-based material and the compound containing the isocyanate functional group with each other, and adding the silicon-based particles to the mixture and then and double-boiling the mixture. Thus, with the improvement of the unstable dispersibility of silicon-based particles, the electrical conductivity may be improved and the stable electrode slurry may be produced, thereby improving the capacity retention.

As a result, in the silicon-carbon composite negative-electrode active material for a lithium secondary battery having improved electrochemical properties according to the present disclosure, the method for producing the same, and the lithium secondary battery including the same, the method may add the carbon material and the compound containing the isocyanate functional group to a solvent and mixing them to produce the mixture and then injecting the silicon-based particles thereto and dispersing the silicon-based particles using a mechanical agitator and an ultrasonic tip to disperse the silicon-based particles. This may maximize the unstable dispersion of the silicon-based particles, thereby greatly improving specific capacitance values at various current densities.

### Examples

Hereinafter, a configuration and an effect of the present disclosure will be described in more detail based on a preferred example of the present disclosure. However, this is presented as a preferred example of the present disclosure, and is not construed as limiting the present disclosure in any way.

Further, it will be understood that well-known methods, procedures, components, and steps have not been described in detail so as not to unnecessarily obscure aspects of the present disclosure.

### 1. Sample preparation

### Present Example 1

### Producing of silicon-carbon composite negative-electrode active material

An oak raw-material was crushed to a size of 20 mesh. The carbonizing heat-treatment was performed on the crushed oak raw-material for 3 hours in an inert atmosphere at 700°C.

Next, the steam activation treatment was performed on the carbonizing-treated raw-material to form pores therein, and the material was then washed to obtain a carbon material.

Next, 0.2 g of the prepared carbon material and 0.05 g of octadecyl isocyanate were added to 50 ml of anhydrous ethanol, and were mixed with each other for 4 hours. Then, 1 g of silicon powders were added to the mixture. Then, the mixture was double-boiled to evaporate the solvent to produce a silicon-carbon mixture.

Next, the silicon-carbon mixture was heat-treated in an inert atmosphere at 900°C for 10 hours to produce a silicon-carbon composite negative-electrode active material.

### Fabrication of lithium secondary battery

The silicon-carbon composite negative-electrode active material and polyacrylic acid (PAA, Mw 3,000,000, Aldrich) were added into distilled water in a weight ratio of 8:2 to produce a slurry. The slurry was coated on a copper foil using a doctor blade, and the coating was then dried in a vacuum oven at 80°C to produce a negative-electrode.

In this connection, a counter electrode, that is, a positive-electrode was made of lithium metal.

The vacuum-dried negative-electrode was used as a reference electrode and the positive-electrode made of the lithium metal was used as a working electrode. A separator membrane as a polyolefin film (Celgard 2400) was assembled with the electrodes to form a 2032 coin cell. Then, the electrolyte was impregnated therein to produce a lithium secondary battery. In this connection, the electrolyte as used was 1 M LiPFF₆/EC (ethylene carbonate)/DEC (diethyl carbonate) (1/1, v/v) + 5wt% FEC (fluoroethylene carbonate, PANAX ETEC, Korea) for a lithium battery.

### Comparative Example 1

Silicone powders, a conductive material (super-p), and polyacrylic acid (PAA, Mw 3,000,000, Aldrich) were added into distilled water in a weight ratio of 6: 2: 2 and were mixed with each other to produce a slurry. The slurry was coated on a copper foil using a doctor blade, and the coating was dried in a vacuum oven at 80°C to produce a negative-electrode.

In this connection, a counter electrode, that is, a positive-electrode was made of lithium metal.

The vacuum-dried negative-electrode was used as a reference electrode and the positive-electrode made of the lithium metal was used as a working electrode. A separator membrane as a polyolefin film (Celgard 2400) was assembled with the electrodes to form a 2032 coin cell. Then, the electrolyte was impregnated therein to produce a lithium secondary battery. In this connection, the electrolyte as used was 1 M LiPFF₆/EC (ethylene carbonate)/DEC (diethyl carbonate) (1/1, v/v) + 5wt% FEC (fluoroethylene carbonate, PANAX ETEC, Korea) for a lithium battery.

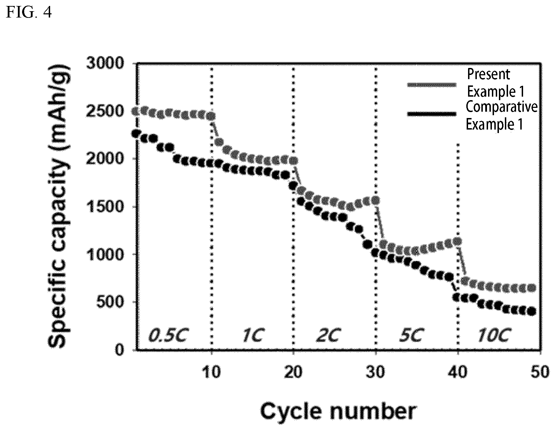

FIG. 4 is a graph showing electrochemical performance evaluation results of lithium secondary batteries as respectively produced according to Present Example 1 and Comparative Example 1.

In this connection, a galvanostatic charge/discharge test was performed on lithium secondary batteries as respectively produced according to Present Example 1 and Comparative Example 1 in order to measure specific capacitance, ratio characteristics based on various current densities, leakage current, and voltage drop (IR-drop) in discharge of the lithium secondary batteries as respectively produced according to Present Example 1 and Comparative Example 1. For the measurement, a potentiostat (VSP, EC-Lab, France) was used. The electrochemical performance was measured at various current densities of 0.5, 1, 2, 5, 10 A/g in a voltage range of 0.01 to 1.5V.

As shown in FIG. 4, it may be identified based on the electrochemical performance as measured at various current densities of 0.5, 1, 2, 5, 10 A/g in a voltage range of 0.01 to 1.5V that the lithium secondary battery as produced according to Present Example 1 has a specific capacitance value at each current density higher than that of the lithium secondary battery as produced according to Comparative Example 1.

As may be identified from the above charging and discharging test results, the lithium secondary battery as produced according to Present Example 1 has a specific capacitance value at each current density higher than that of the lithium secondary battery as produced according to Comparative Example 1 because in the lithium secondary battery produced according to Present Example 1, the carbon material derived from the wood-based material and the compound containing the isocyanate functional group are added into the solvent and are mixed with each other and then the silicon particles were added to the mixture, and then the mixture is double-boiled to produce the silicon-carbon composite negative-electrode active material, such that the unstable dispersibility of the silicon particles is improved to improve the electrical conductivity and produce the stable electrode slurry.

Although the embodiments of the present disclosure have been described in more detail with reference to the accompanying drawings, the present disclosure is not necessarily limited to these embodiments. The present disclosure may be implemented in various modified manners within the scope not departing from the technical idea of the present disclosure. Accordingly, the embodiments disclosed in the present disclosure are not intended to limit the technical idea of the present disclosure, but to describe the present disclosure. the scope of the technical idea of the present disclosure is not limited by the embodiments. Therefore, it should be understood that the embodiments as described above are illustrative and non-limiting in all respects. The scope of protection of the present disclosure should be interpreted by the claims, and all technical ideas within the scope of the present disclosure should be interpreted as being included in the scope of the present disclosure.

## Claims

1. A method for producing a silicon-carbon composite negative-electrode active material for a lithium secondary battery having improved electrochemical properties, the method comprising:
(a) obtaining a carbon material using a wood-based raw-material;
(b) adding and mixing the carbon material and a compound containing an isocyanate functional group to a solvent to produce a mixture, and then adding silicon-based particles to the mixture, and then double-boiling the mixture to produce a silicon-carbon mixture; and
(c) heat-treating the silicon-carbon mixture in an inert atmosphere to obtain a silicon-carbon composite negative-electrode active material.

2. The method of claim 1, wherein the (a) includes:
(a-1) crushing the wood-based raw-material into a size of 80 mesh or smaller;
(a-2) performing a carbonizing heat-treatment on the crushed wood-based raw-material in an inert atmosphere; and
(a-3) performing an activation treatment on the wood-based raw-material subjected to the carbonizing heat-treatment, and then washing the wood-based raw-material to obtain the carbon material.

3. The method of claim 2, wherein in the (a-1), the wood-based raw-material includes at least one selected from a group consisting of softwood, hardwood, waste wood, and paper,
wherein in the (a-2), the carbonizing heat-treatment is performed at 600 to 800°C for 1 to 5 hours.

4. The method of claim 2, wherein in the (a-3), the activation treatment includes steam activation treatment or alkali activation treatment.

5. The method of claim 2, wherein after the (a-3), the carbon material has a specific surface area of 500 to 3,000 m²/g.

6. The method of claim 1, wherein in the (b), each of the silicon-based particles is made of at least one selected from a group consisting of Si, SiO and SiOₓ (1 < x < 2),
wherein in the (b), the carbon material and the compound containing the isocyanate functional group are mixed with each other in a weight ratio in a range of 1: 0.1 to 1: 1.

7. The method of claim 1, wherein in the (b), the compound containing the isocyanate functional group includes at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate.

8. The method of claim 1, wherein in the (c), the heat-treatment is performed at 800 to 1,000°C for 6 to 18 hours.

9. A silicon-carbon composite negative-electrode active material for a lithium secondary battery having improved electrochemical properties, wherein the silicon-carbon composite negative-electrode active material includes silicon-based particles, a carbon material, and a compound containing an isocyanate functional group,
wherein each of the silicon-based particles is made of at least one selected from a group consisting of Si, SiO and SiOₓ (1 < x < 2),
wherein the carbon material is derived from a wood-based raw-material including at least one selected from a group consisting of softwood, hardwood, waste wood, and paper.

10. The silicon-carbon composite negative-electrode active material of claim 9, wherein a content of the carbon material is in a range of 1 to 100 parts by weight based on 100 parts by weight of the silicon-based particles,
wherein the carbon material and the compound containing the isocyanate functional group are mixed with each other in a weight ratio in a range of 1: 0.1 to 1: 1.

11. The silicon-carbon composite negative-electrode active material of claim 9, wherein the compound containing the isocyanate functional group includes at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate.

12. A lithium secondary battery including a silicon-carbon composite negative-electrode active material having improved electrochemical properties, wherein the lithium secondary battery comprises:
a negative-electrode including a silicon-carbon composite negative-electrode active material and a binder;
a lithium positive-electrode spaced apart from the negative-electrode;
a separator membrane disposed between the negative-electrode and the positive-electrode for preventing a short circuit between the negative-electrode and the positive-electrode; and
electrolyte impregnated in each of the negative-electrode and the positive-electrode,
wherein the silicon-carbon composite negative-electrode active material includes silicon-based particles, a carbon material, and a compound containing an isocyanate functional group,
wherein each of the silicon-based particles is made of at least one selected from a group consisting of Si, SiO and SiOₓ (1 < x < 2),
wherein the carbon material is derived from a wood-based raw-material including at least one selected from a group consisting of softwood, hardwood, waste wood, and paper.

13. The lithium secondary battery of claim 12, wherein a content of the carbon material is in a range of 1 to 100 parts by weight based on 100 parts by weight of the silicon-based particles,
wherein the carbon material and the compound containing the isocyanate functional group are mixed with each other in a weight ratio in a range of 1: 0.1 to 1: 1.

14. The lithium secondary battery of claim 12, wherein the compound containing the isocyanate functional group includes at least one selected from a group consisting of octadecyl isocyanate, polyethylene polyphenyl isocyanate, trimethylene diisocyanate, 1,2-propylene diisocyanate, tetramethylene diisocyanate, 2,3-butylene diisocyanate, hexamethylene diisocyanate, octamethylene diisocyanate, 2,4-trimethyl hexamethylene diisocyanate, 2,4,4-trimethyl hexamethylene diisocyanate, and dodecamethylene diisocyanate.
